# EUROPEAN PATENT SPECIFICATION

(11) **EP 3 533 525 B1**
(45) Date of publication and mention of the grant of the patent: **11.01.2023**
(21) Application number: 19159739.2
(22) Date of filing: 27.02.2019
(51) Int. Cl.: B07B 1/24, B07B 13/00

(54) **WASTE SEPARATION DEVICE**
ABFALLTRENNUNGSVORRICHTUNG
APPAREIL DE SÉPARATION DE DÉCHETS

(30) Priority: 28.02.2018 NL 2020506; 01.06.2018 NL 2021040
(43) Date of publication of application: 04.09.2019
(73) Proprietor: Senro B.V., 7559 SP Hengelo (NL)
(72) Inventor: Hoekstra, Johannes Eelke, 7151 ED Eibergen (NL)
(74) Representative: Patentwerk B.V.

(56) References cited:
- EP-A2- 0 545 144
- EP-A2- 0 896 837
- DE-B3-102013 001 256
- GB-A- 2 029 730
- NL-A- 8 302 145

## Description

The invention relates to a device for separating waste, for instance industrial waste or construction waste, such as chunks of stone or concrete, metal objects, tubes and rods, and domestic waste, such as packagings, plastic film, wooden objects and waste components, into fractions of relatively large components and relatively small components, which device comprises:
a frame, which carries:
   a sieve drum with a generally cylindrical form, which drum can be driven rotatably around its central axis by drive means, the end zones of which drum are open and form a feed opening and a discharge opening, which drum has a pattern of continuous holes through which only relatively small waste components can pass;
   supply means, for instance a first endless conveyor belt, for feeding waste to be separated into fractions via the feed opening into the drum;
   first discharge means, for instance a second endless conveyor belt, for receiving and discharging relatively small waste components which were allowed to pass through the holes during transport of waste through the drum; and
   second discharge means, for instance a third endless conveyor belt, for receiving and discharging substantially relatively large waste components which were allowed to pass through the discharge opening;
further comprising:
   at least one helical transport rib which is located on the inner surface of the drum and which urges, and thus transports, waste which is present in the drum in the transport direction, i.e. the direction from the feed opening to the discharge opening, as a result of the rotation of the drum; and
   a number of angularly equidistantly disposed obstruction plates which together cover the holes and which are supported via supports on the outer side of the drum by this drum and each have the general form of a part of a cylinder, the central axis of which lies within the drum, which obstruction plates serve to prevent passage of elongate waste components through the holes.

Such a device is for instance known from EP-A-0 896 837. Compared to the device disclosed therein it is an object of the invention to provide a waste separation device which has a simple structure and enables a horizontal arrangement of the drum, while a fully controlled, forced transport of the waste components through the drum in the transport direction, so from the feed opening toward the discharge opening, is nevertheless guaranteed. The device according to the invention has for this purpose the feature that the at least one transport rib extends over the whole length of the drum; the holes are grouped in a pattern such that a number of holes is disposed in a helical row, this row having a helical form corresponding to the adjacent transport rib placed downstream in the transport direction, and the distance of each hole to this transport rib is smaller than 0.4 x the smallest linear dimension of a hole; breakers disposed in a regular pattern at equal mutual distances are situated in the central zone of the area between the adjacent windings of the rib or the ribs, which breakers comprise two upright plates disposed together in a V-shape relative to the inner wall of the drum and have a sharp front edge directed counter to the direction of movement of the waste between these windings and having a width in the order of magnitude of the thickness of the plates; and the one plate extends in the direction of the local tangent of the adjacent windings of the rib or ribs and the other plate has an orientation such that it urges the passing waste in the transport direction toward a hole.

During the revolving and tumbling forward transport of the waste through the drum under the influence of the rotation of the drum, the waste always rolls and slides in the lowest part of the drum over the wall of the drum. According to the present aspect, the breakers act to mechanically process the waste flow in that the more or less sharp front edges of the breakers will exert a considerable force on the passing waste components. These are thereby pulled apart and broken, whereby larger fractions will undergo a certain size reduction, with the result that the proportion of relatively small waste components increases and more fractions can be sieved via the holes out of the drum.

An effective sieving action and separation is obtained owing to the presence of at least one transport rib, which extends over the whole length of the drum and effectively acts in the manner of an Archimedes' screw, and the specific placing of the holes, i.e. an arrangement in a helical row corresponding to the adjacent transport rib placed downstream in the transport direction, wherein the distance of each hole to this transport rib is small, i.e. smaller than 0.2 x the smallest linear diameter of a hole.

Because the row of holes is in this described manner disposed on the side of the transport rib which could be referred to as the "urging side", it is highly likely that, over the whole run of the waste through the drum, relatively small waste components leave the drum by falling through the relevant hole. These sieved-out relatively small components are then received and discharged by first discharge means, for instance a second endless conveyor belt.

Larger components, which cannot pass through the sieve openings in the drum, are forced by the transport rib or transport ribs to pass through the discharge opening and are there received by second discharge means, for instance a third endless conveyor belt.

Use is preferably made of at least two identical transport ribs extending equidistantly relative to each other. An increased waste flow can hereby be realized, which enhances the effectiveness of the device.

The device can further be embodied such that the holes all have a shape chosen from the group including: round, oval, triangular, rectangular, for instance square, pentagonal, hexagonal and octagonal, optionally regular, and have a chosen orientation. In the case of round holes, these holes preferably have a diameter in the order of magnitude of about 200-400 mm. In the case of other shapes, similar dimensions can be applied. These are then the linear dimensions in that case.

The holes are preferably dimensioned such that the inscribed circle of each hole has a diameter of 200 - 400 mm.

It must be understood that in the case in which an elongate waste component protrudes through a hole, an attempt must be made to remove this component from the hole and return it to the waste flow through the drum. Round holes have in this respect the limitation that when the drum continues to rotate, no effective difference in diameter occurs of the hole relative to the position of the elongate element, whereby the chance of the elongate element protruding through the hole coming loose is limited. A non-round shape is therefore preferred, a number of options for which are stated above. A triangular shape has the potential drawback that the acute angles of the triangular shape make it more difficult for an elongate element to come loose from the hole edge. Square, pentagonal, hexagonal and octagonal shapes are therefore preferred.

According to a further aspect of the invention, the device can have the feature that the pattern of holes comprises: rows of holes extending angularly equidistantly relative to each other in the longitudinal direction of the drum. Because of this arrangement of holes, integral drum parts remain between the described rows of holes, whereby the mechanical stiffness and the strength of the drum are preserved, while the transport of a relatively small waste components remains unaffected owing to the described placing of the holes.

The latter described embodiment is preferably embodied such that the pattern of holes comprises: pairs of two mutually parallel rows of holes, which extend angularly equidistantly relative to each other in the longitudinal direction of the drum and are disposed at a distance from adjacent pairs of rows.

According to an additional aspect of the invention, the device has the feature that the pattern of holes comprises a second helical row of holes, this row having a helical form corresponding to the adjacent transport rib placed upstream in the transport direction, and the distance of each hole to this transport rib is smaller than 0.4 x the smallest linear dimension of the hole.

According to the basic idea of the invention, the drum comprises a number of holes which are arranged in a helical row corresponding to the adjacent transport rib placed downstream in the transport direction. The distance of each hole to this transport rib is here small. According to another aspect discussed above, there are also holes on the other side of the free space between two adjacent windings, namely a row of holes with a helical form corresponding to the adjacent transport rib placed upstream in the transport direction. The distance of each hole to this transport rib is likewise small. The first stated row of holes, on the urging side of the rib, contributes dominantly to the reliable sieving action of the drum. The holes which may be present on the other side in the space between the adjacent windings bear less responsibility for the sieving action.

According to yet another aspect of the invention, the device has the special feature that overturners are arranged on the inner side of the drum in the space between the holes on the side lying downstream in transport direction, which overturners have a first plate with a form which tapers from the ribs and is particularly generally triangular and have an upward inclining position relative to the local direction of movement of the waste, and have a second plate extending to a position above the rib, such that formation of the waste into clumps and sausage-like rolls is prevented.

These overturners prevent clumping of the waste, and the revolving of the drum creating structures that could be described as "sausages", to a large degree, in practice usually wholly. Relatively small waste components are understandably also present in such clumps and sausage-like rolls, which components should have been sieved out through the holes but due to the merging and clumping together form a relatively large waste component, which is discharged via the discharge opening. It will be apparent that this is an undesirable phenomenon, which is obviated with the latter described embodiment.

Described above is an embodiment in which the pattern of holes comprises: rows of holes or pairs of rows of mutually parallel holes extending angularly equidistantly relative to each other in the longitudinal direction of the drum. According to the invention, it is preferred for the number of rows of holes or pairs of holes to amount to 4-10 and for an obstruction plate which covers these holes to be added to each row or pair of rows.

According to yet another aspect of the invention, the device has the feature that each obstruction plate has a form and/or position relative to the drum such that in the lower zone of the drum the distance between an obstruction plate and the drum increases during operation, such that a releasing form is obtained.

For these obstruction plates use can be made of plates having the form of a part of the cylinder, the axis of curvature of which lies inside the drum but does not coincide with the central axis of the drum.

Sieved-out relatively small waste components which were allowed to pass through the holes are received by the obstruction plates and, as a result of the continuing rotation of the drum, are carried downward along the obstruction plates and fall, after which they are received by the first discharge means. On the inlet side of the obstruction plates these plates can be closed relative to the holes. This is not strictly necessary, but this structure does enable the relevant closing panels also to serve as the supports for the obstruction plates. From these panels, the free space between the drum and the obstruction plates widens to some extent, which advances a good action of releasing of sieved-out relatively small waste components.

According to a subsequent aspect of the invention, the device has the special feature that a tube connects to each hole on the outer side of the drum and the outer end of this tube lies at a distance from the inner surface of a relevant obstruction plate.

Because of the presence of a tube with a generally prismatic form, i.e. a form wherein the tube has over its whole axial length the same cross-sectional form, it is prevented to a far-reaching extent that elongate elements extending at a small angle relative to a hole are allowed to pass through a hole. This is because they then come into contact with the inner surface of the tube, whereby their further displacement through the hole is blocked or is at least greatly impeded.

This latter embodiment preferably has the special feature that a tube connects to each hole on the outer side of the drum, and the outer end of this tube lies at a distance from the inner surface of a relevant obstruction plate.

An embodiment wherein the internal shape of each tube corresponds to the shape of the relevant hole is preferred.

The invention will now be elucidated with reference to the accompanying drawing. In the drawing:
figure 1 shows a partially cut-away perspective view of a device according to the invention;
figure 2 shows a partially cut-away top view of a device according to figure 1;
figure 3 shows the vertical axial section III-III of figure 2;

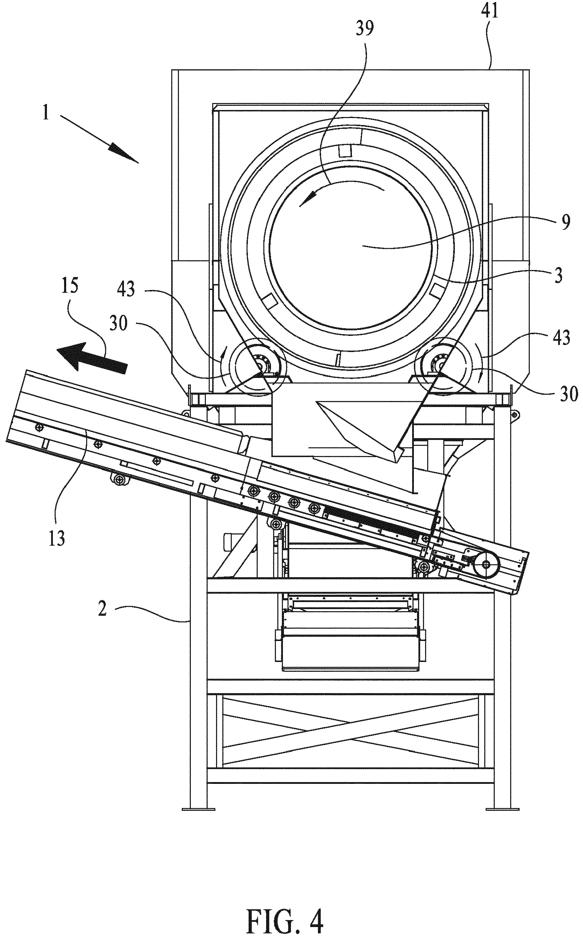

figure 4 shows the vertical section IV-IV of figure 2;
figure 5 shows a perspective view of the sieve drum with tubes connecting to the sieve holes, wherein the obstruction plates are not drawn;
figures 6 and 7 show the detail VI, VII according to figure 3 on enlarged scale, from two different viewpoints;
figures 8 and 9 show the detail IIX, IX of figure 3 on enlarged scale, from two different viewpoints;
figure 10 shows in highly schematic form a section through the sieve drum with holes, tubes connecting thereto and the six obstruction plates;
figures 11a, 11b, 11c, 11d, 11e, 11f, 11g, 11h show schematically eight different possible shapes of the sieve holes in the sieve drum; and
figure 12 shows the vertical section XII-XII of figure 2.

Corresponding components and elements are designated in all the figures with the same reference numerals.

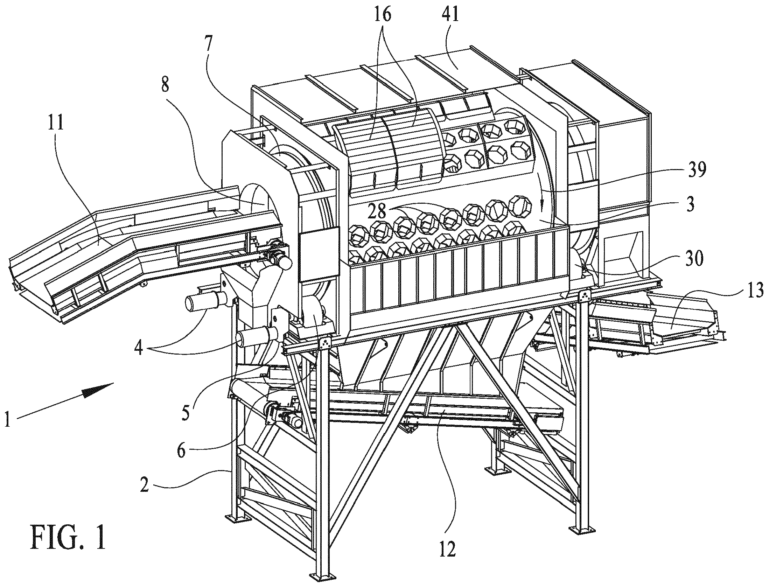

Figure 1 shows a device 1 for separating waste, for instance industrial waste or construction waste, such as chunks of stone or concrete, metal objects, tubes and rods, and domestic waste, such as packagings, plastic film, wooden objects, discarded mattresses and other waste components, into fractions of relatively large components and relatively small components, which device comprises:
a frame 2 which is positioned on the ground and which carries:
a sieve drum 3 with a generally cylindrical form, which drum can be driven rotatably around its central axis by drive means 4, 5, 6, 7, the end zones of which drum are open and form a feed opening 8 and a discharge opening 9, which drum 3 has a pattern of continuous holes 10 through which only relatively small waste components can pass;
supply means, embodied as a first endless conveyor belt 11, for feeding waste to be separated into fractions via feed opening 8 into drum 3;
first discharge means, embodied as second endless conveyor belt 12, for receiving and discharging relatively small waste components which were allowed to pass through holes 10 during transport of waste through drum 3; and
second discharge means, embodied as third endless conveyor belt 13, for receiving and discharging substantially relatively large waste components which were allowed to pass through discharge opening 9.

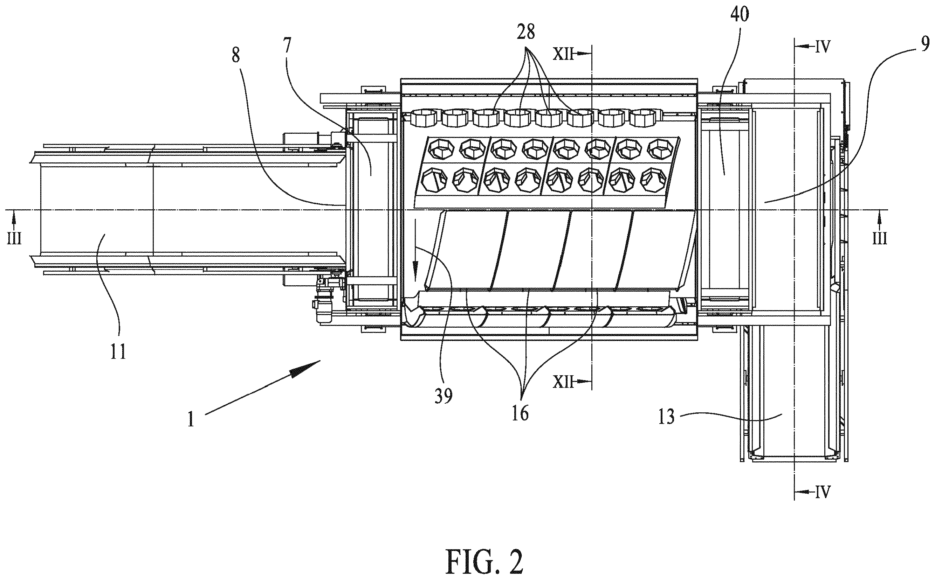

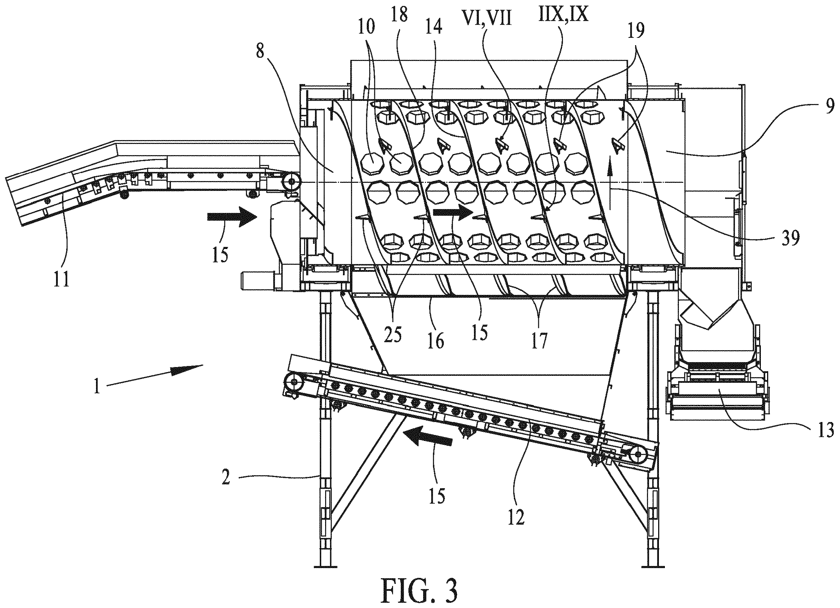

As figure 3 shows, device 1 further comprises:
two transport ribs 14, 18 which are located on the inner surface of drum 3 and are placed equidistantly and in interlaced manner, which urge, and thus transport, waste which is present in drum 3 in the transport direction 15, i.e. the direction from feed opening 8 to discharge opening 9, as a result of rotation of drum 3; and, as figures 2, 10 and 12 show,
a number of angularly equidistantly disposed obstruction plates 16 which together cover the holes and which are supported via supports 17 on the outer side of drum 3 by this drum 3 and each have the form of a part of a cylinder, the central axis of which lies within drum 3, which obstruction plates 16 serve to prevent passage of elongate waste components through holes 10.

Transport ribs 14, 18 extend over the whole length of drum 3 and two turns of drum 3.

Holes 10 are grouped in a pattern such that a number of holes 10 is disposed in a helical row, this row having a helical form corresponding to the adjacent transport rib 14 placed downstream in the transport direction, and the distance of each hole 10 to this transport rib 14 is smaller than 0.4 x the smallest linear diameter of a hole 10.

The drive means comprise an electric motor 4 and connected to the output shaft of electric motor 4 a reduction gearbox 5, the output shaft of which drives a drive roller 6 at a reduced rotation speed, this roller in turn driving an annular drive surface 7 in rotating manner, which drive surface 7 forms part of sieve drum 3. It must be understood that two of such drive means 4, 5, 6, 7 are present, i.e. one on either side of the drum, in the area of feed opening 8. Located in the area of discharge opening 9 in this embodiment are freely rotating support rollers 30, which support in freely rotatable manner an annular running surface 40 located on drum 3 in the area of discharge opening 9.

Holes 10 all have a shape chosen from the group including: round, oval, triangular, rectangular, for instance square, pentagonal, hexagonal and octagonal, optionally regular, and have a chosen orientation. In this case the holes all have the shape of a regular octagon.

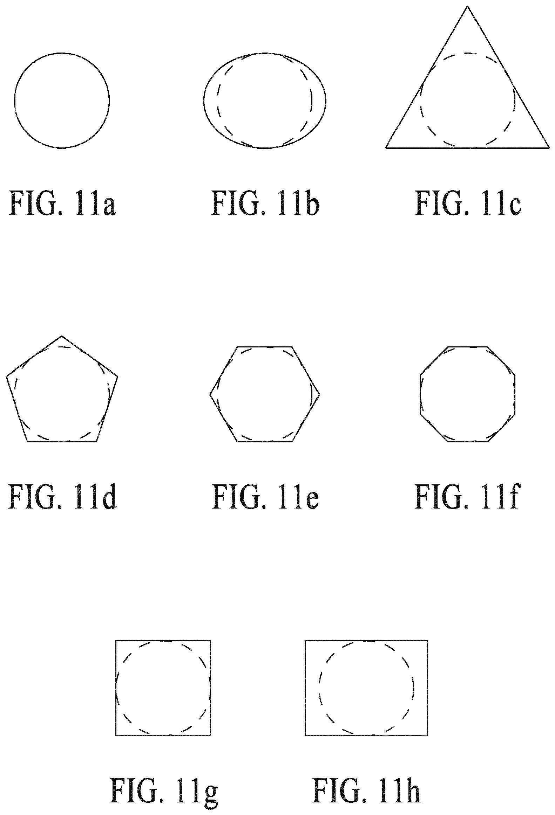

Figure 11a shows a round hole with a diameter in the order of about 200-400 mm. A round shape is however not preferred according to the invention, as elucidated above. Figures 11b-11h show seven possible non-round shapes. Shown therein with broken lines are the largest possible inscribed circles, the diameters of which are selected by way of guidance to be equal to that of the round hole according to figure 11a.

The pattern of holes comprises pairs of two rows of mutually parallel holes 10 which extend angularly equidistantly relative to each other in the longitudinal direction of the drum and are disposed at a distance from adjacent pairs of rows.

The pattern of holes also comprises a second helical row of holes 10, which row has a helical form corresponding to the adjacent transport rib 18 placed upstream in the transport direction, wherein the distance of each hole 10 to this transport rib 18 is smaller than 0.4 x the smallest linear dimension of hole 10.

Situated in the central zone of the area between the adjacent windings of rib 14 or ribs 14, 18 are breakers 19 which are disposed in a regular pattern at equal mutual distances and which comprise two upright plates 20, 21 disposed together in a V-shape relative to the inner wall of drum 3, and which have a sharp front edge 23 directed counter to the direction of movement 32 of the waste between these windings and having a width in the order of magnitude of the thickness of the plates 20, 21. These breakers 19 are in this example embodied such that the one plate 21 extends at least roughly in the direction of the local tangent of the adjacent windings of rib 18 or ribs 14, 18 and the other plate 20 has an orientation such that it urges the passing waste in the transport direction toward an adjacent hole.

Overturners 25 are further arranged on rib 14 and on the inner side of drum 3 in the space 24 between holes 10 on the side lying downstream in transport direction 32, which overturners 25 have a first plate 26 having a form which tapers from rib 14 and is in particular generally triangular, and having an inward inclining position relative to the local direction of movement 23 of the waste, and having a second plate 27 extending to a position above rib 14, such that formation of the waste into clumps and sausage-like rolls is prevented.

In this embodiment the number of rows of holes 10 or pairs 28 of holes 10 amounts to six, and an obstruction plate 16 covering these holes 10 is added to each row or pair 28 of rows.

Each obstruction plate 16 has a form and position relative to drum 3 such that, in the lower zone of drum 3, the distance between an obstruction plate 16 and drum 3 increases during operation, such that a releasing form is obtained.

A tube 28 connects to each hole 10 on the outer side of drum 3. Outer end 29 of this tube 28 is situated at a distance from the inner surface of a relevant obstruction plate 16.

The internal shape of each tube 28 is prismatic, i.e. has the same cross-section at every axial position, and corresponds to the shape of the relevant hole 10, in this case a regular octagon.

In practice, tubes 28 can have lengths in the order of 150-250 mm.

Plates 20, 21, which form part of breakers 19, can have a height in the order of 100-150 mm.

The height of transport ribs 14, 18 can lie in the order of 150-250 mm.

These dimensions will be chosen also depending on the expected dimensions of the waste components.

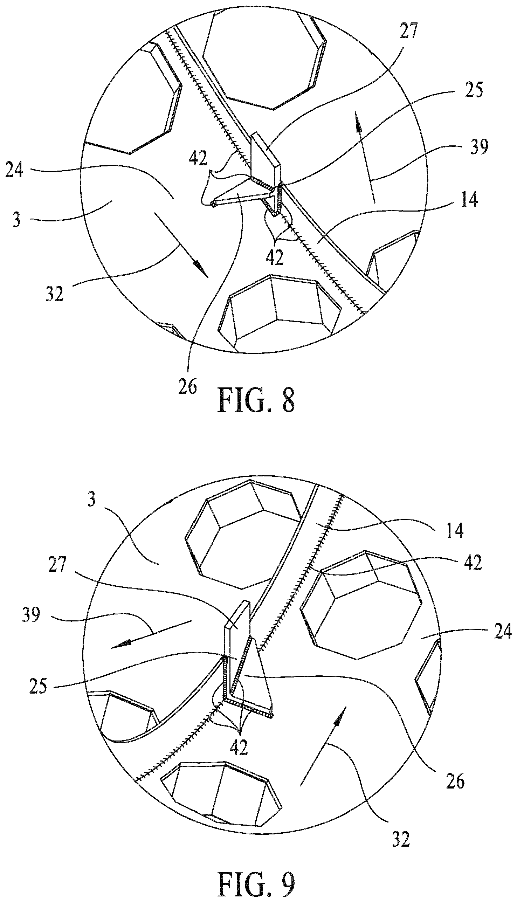

In respect of the overturners 25 as according to figures 8 and 9 it is also noted that, although the part of second plate 27 of overturner 25 extending above rib 14 is not very sharp, namely corresponds to the applied plate thickness, this part can still have a blade-like cutting action on the waste components tumbling past.

As a result of the inclining position of first plate 26 of overturner 25 a compacting of the waste due to the waste rolling and tumbling past, which could result in the formation of clumps and sausage-like rolls, is prevented. This is a highly undesirable phenomenon, which would greatly disrupt the sieving action of sieve drum 3. This is because the relatively small waste components would then be wrapped up in a larger structure, which will be treated as a relatively large waste component by device 1. Such formed sausage-like rolls and clumps will therefore be transported further in the drum and discharged via discharge opening 9 or, even worse, will result in a blockage. Breakers 19 also contribute substantially to keeping the waste separated into the smallest possible components or a size reduction of waste components. In practice, an inclining position of about 30° of first plate 26 of overturners 25 is a good choice.

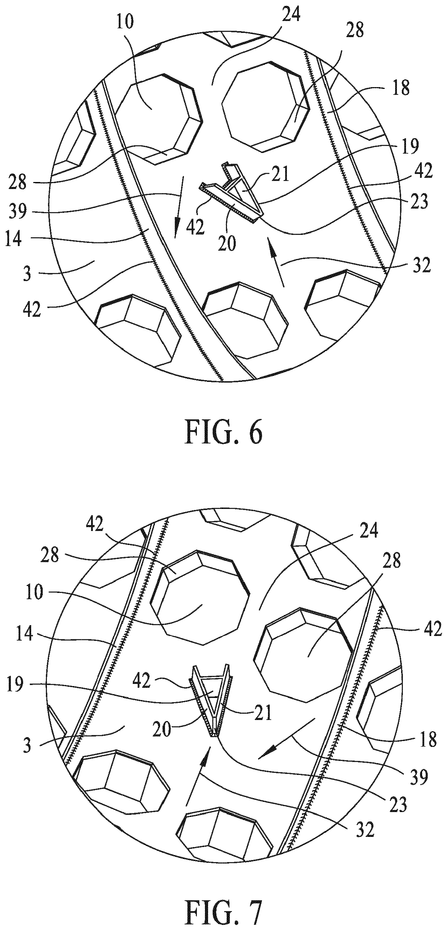

As shown in figures 6, 7, 8 and 9, the various plates 20, 21, 26, 27 are connected to respectively drum 3 and rib 14 by welding. This is designated schematically in these figures with weld beads 42.

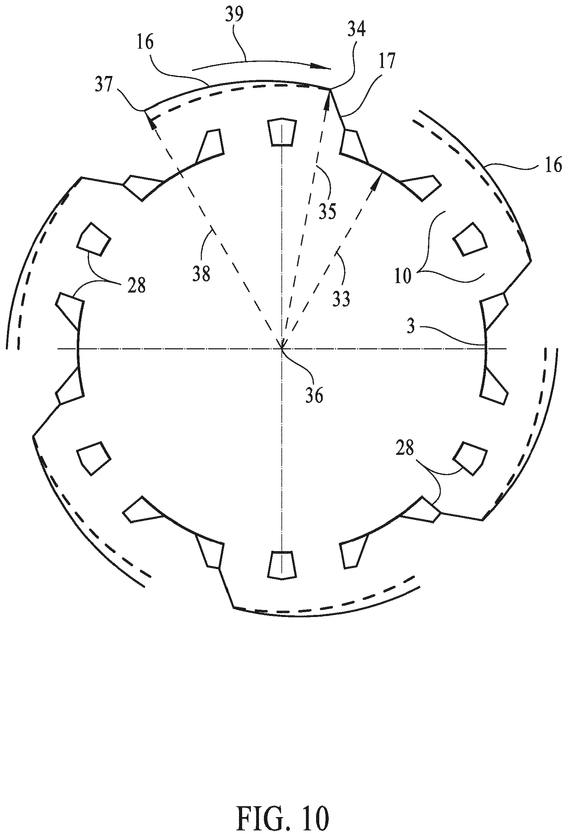

The highly schematic view in figure 10 shows that obstruction plates 16 are supported via supports 17 by drum 3. Each of the six obstruction plates 16 covers, together with the relevant supports 17, two rows of tubes 28. As shown in the figure, drum 3 has a radius 33, the front edge 34, as according to the rotation direction 39 of drum 3, of obstruction plate 16 has a distance 35 from the central axis of drum 3 and the rear edge 37 of obstruction plates 16 has a distance 38 from the central axis of drum 3. Distance 38 is greater than distance 35. The difference lies for instance in the order of magnitude of 50 mm. A releasing action is hereby obtained, whereby relatively small waste components which were allowed to pass through holes 10 and tubes 28 are easily able to pass on the underside of drum 3 the obstruction plate which is the lowermost plate at that moment and are then received by the second conveyor belt 12 for further transport.

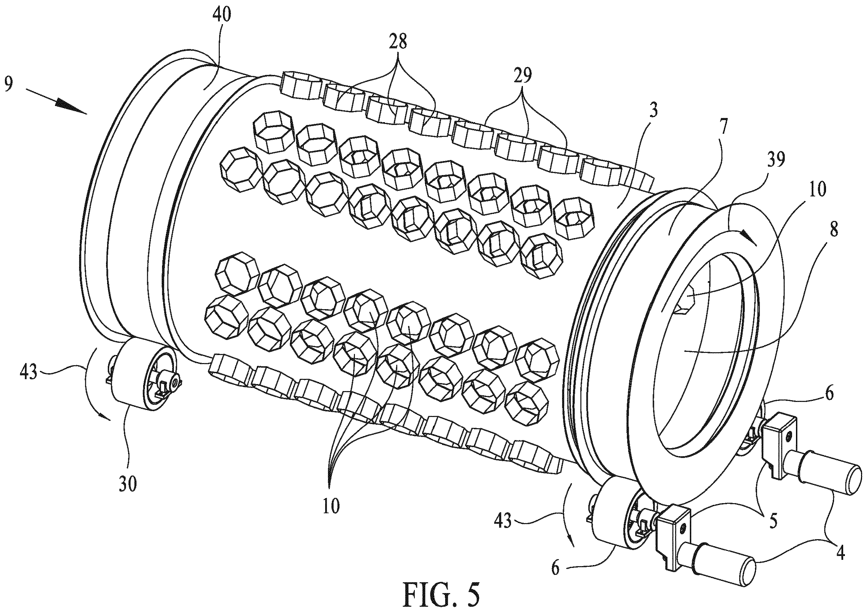

It is noted that in figures 1, 2 and 5 at least a part of obstruction plates 16 has not been drawn for the sake of clarity, whereby drum 3 with tubes 28 are clearly visible. Casing 41 of drum 3 according to figure 1 is only partially shown so as to show drum 3 and the positions of obstruction plates 16. The same applies to safety covers, which cover rollers 6 and 30. These are however standard safety measures and do not per se form part of the concept according to the invention.

Referring to figure 3, the pattern in which holes 10 are disposed distributed over sieve drum 3 is noted. This figure shows that a helical row of holes 10 lies at a short distance from transport rib 14 over the whole length of the drum. The same applies to a helical row 10 at a short distance from transport rib 18. Two helical rows of holes 10 thus lie between transport ribs 14, 18. It is further noticeable that there is another part-pattern, namely six pairs of rows of holes extending in the axial direction of the drum. Referring to figure 10, it is noted that added to each of the six pairs of rows of holes 10 is an obstruction plate 16, which completely covers these holes. Relatively small waste components which were allowed to pass through the lower holes are deposited onto the relevant obstruction plate 16 by rotation in the direction 39 as according to figure 10. During continuing rotation of drum 3 this waste material slides off the relevant obstruction plate 16 and falls onto second conveyor belt 12.

For the material of drum 3, transport ribs 14, 18, breakers 19 and overturners 25 it is possible to envisage S355 steel with a wall thickness in the order of magnitude of 12 mm.

Drive rollers 6 and support rollers 30 can be manufactured from a hard and wear-resistant type of rubber.

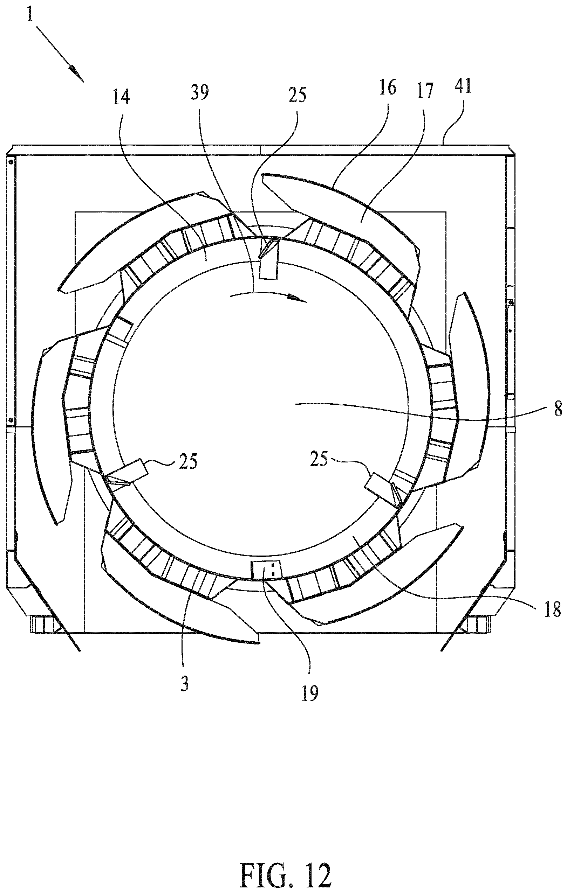

Figure 12 shows the structure according to figure 10, but less schematically.

## Claims

1. Device (1) for separating waste, for instance industrial waste or construction waste, such as chunks of stone or concrete, metal objects, tubes and rods, and domestic waste, such as packagings, plastic film, wooden objects and waste components, into fractions of relatively large components and relatively small components, which device comprises:
a frame (2), which carries
a sieve drum (3) with a generally cylindrical form, which drum can be driven rotatably around its central axis by drive means (4, 5, 6, 7), the end zones of which drum are open and form a feed opening (8) and a discharge opening (9), which drum (3) has a pattern of continuous holes (10) through which only relatively small waste components can pass;
supply means, for instance a first endless conveyor belt (11), for feeding waste to be separated into fractions via the feed opening (8) into the drum (3);
first discharge means, for instance a second endless conveyor belt (12), for receiving and discharging relatively small waste components which were allowed to pass through the holes (10) during transport of waste through the drum (3); and
second discharge means, for instance a third endless conveyor belt (13), for receiving and discharging substantially relatively large waste components which were allowed to pass through the discharge opening (9);
further comprising:
at least one helical transport rib (14) which is located on the inner surface of the drum and which is configured to urge, and thus to transport, waste which is present in the drum (3) in the transport direction (15), i.e. the direction from the feed opening (8) to the discharge opening (9), as a result of the rotation of the drum (3); and
a number of angularly equidistantly disposed obstruction plates (16) which together cover the holes and which are supported via supports (17) on the outer side of the drum (3) by this drum (3) and each have the form of a part of a cylinder, the central axis of which lies within the drum (3), which obstruction plates (16) serve to prevent passage of elongate waste components through the holes (10);
**characterized in that**
the at least one transport rib (14) extends over the whole length of the drum (3); the holes (10) are grouped in a pattern such that a number of holes (10) is disposed in a helical row, this row having a helical form corresponding to the adjacent transport rib (14) placed downstream in the transport direction,
the distance of each hole (10) to this transport rib (14) is smaller than 0.4 x the smallest linear dimension of a hole (10);
breakers (19) disposed in a regular pattern at equal mutual distances are situated in the central zone of the area between the adjacent windings of the rib (14) or the ribs (14, 18), which breakers (19) comprise two upright plates (20, 21) disposed together in a V-shape relative to the inner wall of the drum (3) and have a sharp front edge directed counter to the direction of movement (32) of the waste between these windings and having a width in the order of magnitude of the thickness of the plates (20, 21); and
the one plate (21) extends in the direction of the local tangent of the adjacent windings of the rib (18) or ribs (14, 18) and the other plate (20) has an orientation such that it urges the passing waste in the transport direction toward a hole (10).

2. Device as claimed in claim 1, comprising at least two identical transport ribs (14, 18) extending equidistantly relative to each other.

3. Device as claimed in claim 1, wherein the holes (10) all have a shape chosen from the group including: round, oval, triangular, rectangular, for instance square, pentagonal, hexagonal and octagonal, optionally regular, and have a chosen orientation.

4. Device as claimed in claim 3, wherein the inscribed circle of each hole has a diameter of 200 - 400 mm.

5. Device as claimed in claim 1, wherein the pattern of holes comprises: rows of holes (10) extending angularly equidistantly relative to each other in the longitudinal direction of the drum.

6. Device as claimed in claim 5, wherein the pattern of holes comprises:
pairs of two mutually parallel rows of holes (10), which extend angularly equidistantly relative to each other in the longitudinal direction of the drum and are disposed at a distance from adjacent pairs of rows.

7. Device as claimed in claim 1, wherein the pattern of holes comprises a second helical row of holes (10), this row having a helical form corresponding to the adjacent transport rib (18) placed upstream in the transport direction, and the distance of each hole (10) to this transport rib (18) is smaller than 0.4 x the smallest linear dimension of the hole (10).

8. Device as claimed in claim 1, wherein overturners (25) are arranged on the rib (14) and on the inner side of the drum (3) in the space (24) between the holes (10) on the side lying downstream in transport direction (32), which overturners (25) have a first plate (26) with a form which tapers from the rib (14) and is particularly generally triangular and have an inward inclining position relative to the local direction of movement (23) of the waste, and have a second plate (27) extending to a position above the rib (14), such that formation of the waste into clumps and sausage-like rolls is prevented.

9. Device as claimed in claim 5 or 6, wherein the number of rows of holes (10) or pairs (28) of holes (10) amounts to 4-10 and an obstruction plate (16) which covers these holes (10) is added to each row or pair (28) of rows.

10. Device as claimed in claim 1, wherein each obstruction plate (16) has a form and/or position relative to the drum (3) such that in the lower zone of the drum (3) the distance between an obstruction plate (16) and the drum (3) increases during operation, such that a releasing form is obtained.

11. Device as claimed in claim 1, wherein a tube (28) connects to each hole (10) on the outer side of the drum (3) and the outer end (29) of this tube (28) lies at a distance from the inner surface of a relevant obstruction plate (16).

12. Device as claimed in claim 11, wherein the internal shape of each tube (28) corresponds to the shape of the relevant hole (10).

## Patentansprüche

1. Vorrichtung (1) zum Trennen von Abfall, zum Beispiel Industrieabfall oder Bauabfall, zum Beispiel Blöcke aus Stein oder Beton, Metallobjekte, Rohre und Stangen, und Haushaltsabfall, zum Beispiel Verpackungen, Plastikfolien, Holzobjekte und Abfallkomponenten, in Gruppen mit relativ großen Komponenten und relativ kleinen Komponenten, wobei die Vorrichtung Folgendes umfasst:
einen Rahmen (2), der Folgendes trägt:
eine Siebtrommel (3) mit einer im Allgemeinen zylindrischen Form, wobei die Trommel von einer Antriebseinrichtung (4, 5, 6, 7) um ihre Mittelachse drehbar angetrieben werden kann, wobei die Endbereiche der Trommel offen sind und eine Zuführöffnung (8) und eine Ablassöffnung (9) ausbilden, wobei die Trommel (3) ein Muster durchgehender Bohrungen (10) aufweist, durch die nur relativ kleine Abfallkomponenten gelangen können;
eine Versorgungseinrichtung, zum Beispiel ein erstes Endlosförderband (11), um in Gruppen zu trennenden Abfall über die Zuführöffnung (8) der Trommel (3) zuzuführen;
eine erste Ablasseinrichtung, zum Beispiel ein zweites Endlosförderband (12) zum Aufnehmen und Ablassen relativ kleiner Abfallkomponenten, die während des Transports von Abfall durch die Trommel (3) durch die Bohrungen (10) gelangen konnten; und
eine zweite Ablasseinrichtung, zum Beispiel ein drittes Endlosförderband (13) zum Aufnehmen und Ablassen im Wesentlichen relativ großer Abfallkomponenten, die durch die Ablassöffnung (9) gelangen konnten;
ferner Folgendes umfassend:
mindestens eine schraubenförmige Transportrippe (14), die sich auf der Innenfläche der Trommel befindet und dazu ausgelegt ist, in der Trommel (3) vorhandenen Abfall in die Transportrichtung (15), d. h. die Richtung von der Zuführöffnung (8) zur Ablassöffnung (9), als Ergebnis der Drehung der Trommel (3) zu schieben und somit zu transportieren; und
mehrere winklig im gleichen Abstand angeordnete Hindernisplatten (16), die zusammen die Bohrungen abdecken und die von Stützen (17) auf der Außenseite der Trommel (3) von der Trommel (3) gestützt werden und jeweils die Form eines Teils eines Zylinders aufweisen, dessen Mittelachse innerhalb der Trommel (3) liegt, wobei die Hindernisplatten (16) dazu dienen, zu verhindern, dass längliche Abfallkomponenten durch die Bohrungen (10) gelangen;
**dadurch gekennzeichnet, dass**
sich die mindestens eine Transportrippe (14) über die gesamte Länge der Trommel (3) erstreckt; die Bohrungen (10) in einem Muster gruppiert sind, sodass eine Anzahl von Bohrungen (10) in einer schraubenförmigen Reihe angeordnet ist,
wobei die Reihe passend zur angrenzenden Transportrippe (14), die in die Transportrichtung nachgelagert platziert ist, schraubenförmig ist, wobei der Abstand jeder Bohrung (10) zu dieser Transportrippe (14) kleiner als 0,4 x die kleinste lineare Abmessung einer Bohrung (10) ist;
Brecher (19) in einem regelmäßigen Muster in gleichen Abständen zueinander in dem Mittelbereich der Fläche zwischen den angrenzenden Windungen der Rippe (14) oder der Rippen (14, 18) angeordnet sind, wobei die Brecher (19) zwei aufrechte Platten (20, 21) umfassen, die zusammen V-förmig in Bezug zur Innenwand der Trommel (3) angeordnet sind und eine scharfe Vorderkante aufweisen, die entgegen der Bewegungsrichtung (32) des Abfalls zwischen diesen Windungen ausgerichtet ist und eine Breite in der Größe der Stärke der Platten (20, 21) aufweist; und
sich die eine Platte (21) in die Richtung des lokalen Tangens der angrenzenden Windungen der Rippe (18) oder Rippen (14, 18) erstreckt, und die andere Platte (20) eine derartige Ausrichtung aufweist, dass sie den vorbeilaufenden Abfall in die Transportrichtung zu einer Bohrung (10) drückt.

2. Vorrichtung nach Anspruch 1, mindestens zwei identische Transportrippen (14, 18) umfassend, die sich zueinander in gleichem Abstand erstrecken.

3. Vorrichtung nach Anspruch 1, wobei die Bohrungen (10) alle eine Form aufweisen, die aus der folgenden Gruppe ausgewählt ist: rund, oval, dreieckig, rechteckig, zum Beispiel quadratisch, fünfeckig, sechseckig und achteckig, optional regelmäßig, und eine ausgewählte Ausrichtung aufweisen.

4. Vorrichtung nach Anspruch 3, wobei der Inkreis jeder Bohrung einen Durchmesser von 200-400 mm aufweist.

5. Vorrichtung nach Anspruch 1, wobei das Muster der Bohrungen Folgendes umfasst: Reihen von Bohrungen (10), die sich winklig in gleichem Abstand zueinander in Längsrichtung der Trommel erstrecken.

6. Vorrichtung nach Anspruch 5, wobei das Muster der Bohrungen Folgendes umfasst:
Paare zweier zueinander paralleler Reihen von Bohrungen (10), die sich winklig in gleichem Abstand zueinander in Längsrichtung der Trommel erstrecken und von angrenzenden Reihenpaaren beabstandet angeordnet sind.

7. Vorrichtung nach Anspruch 1, wobei das Muster der Bohrungen eine zweite schraubenförmige Reihe von Bohrungen (10) umfasst, wobei diese Reihe zu der angrenzenden Transportrippe (18), die in Transportrichtung vorgelagert platziert ist, passend schraubenförmig ist, und wobei der Abstand jeder Bohrung (10) zu dieser Transportrippe (18) kleiner als 0,4 x die kleinste Abmessung der Bohrung (10) ist.

8. Vorrichtung nach Anspruch 1, wobei Wender (25) an der Rippe (14) und an der Innenseite der Trommel (3) in dem Raum (24) zwischen den Bohrungen (10) und auf der Seite, die in Transportrichtung (32) nachgelagert ist, angeordnet sind, wobei die Wender (25) eine erste Platte (26) mit einer Form, die sich von der Rippe (14) verjüngt und insbesondere im Allgemeinen dreieckig ist, aufweisen und eine nach innen geneigte Position in Bezug zur lokalen Bewegungsrichtung (23) des Abfalls aufweisen und eine zweite Platte (27) aufweisen, die sich zu einer Position über der Rippe (14) erstreckt, sodass verhindert wird, dass der Abfall verklumpt oder in wurstförmige Rollen geformt wird.

9. Vorrichtung nach Anspruch 5 oder 6, wobei die Anzahl der Reihen von Bohrungen (10) oder Paare (28) von Bohrungen (10) 4-10 beträgt und eine Hindernisplatte (16), die diese Bohrungen (10) abdeckt, zu jeder Reihe oder zu jedem Paar (28) von Reihen hinzugefügt wird.

10. Vorrichtung nach Anspruch 1, wobei jede Hindernisplatte (16) eine Form und/oder Position in Bezug zur Trommel (3) aufweist, sodass in dem unteren Bereich der Trommel (3) der Abstand zwischen einer Hindernisplatte (16) und der Trommel (3) während des Betriebs zunimmt, sodass eine Freigabeform erhalten wird.

11. Vorrichtung nach Anspruch 1, wobei ein Rohr (28) mit jeder Bohrung (10) auf der Außenseite der Trommel (3) verbunden ist und das äußere Ende (29) dieses Rohrs (28) von der Innenfläche einer jeweiligen Hindernisplatte (16) beabstandet ist.

12. Vorrichtung nach Anspruch 11, wobei die innere Form jedes Rohrs (28) zur Form der jeweiligen Bohrung (10) passt.

## Revendications

1. Dispositif (1) pour la séparation de déchets, par exemple des déchets industriels ou des déchets de construction, tels que des morceaux de pierre ou de béton, des objets métalliques, des tubes et des tiges, et des déchets ménagers, tels que des emballages, du film plastique, des objets en bois et des composants de déchets, en fractions de composants relativement grands et de composants relativement petits, ledit dispositif comprenant :
un bâti (2), qui supporte
un tambour perforé (3) présentant une forme globalement cylindrique, ledit tambour pouvant être entraîné en rotation autour de son axe central par des moyens d'entraînement (4, 5, 6, 7), les régions d'extrémité dudit tambour étant ouvertes et formant une ouverture d'introduction (8) et une ouverture de rejet (9), ledit tambour (3) comportant un motif de trous continus (10) à travers lequel seuls des composants de déchets relativement petits peuvent passer ;
des moyens d'alimentation, par exemple une première courroie transporteuse sans fin (11), destinés à alimenter le tambour (3) en déchets à séparer en fractions à travers l'ouverture d'introduction (8) ;
des premiers moyens de rejet, par exemple une deuxième courroie transporteuse sans fin (12), destinés à recevoir et rejeter des composants de déchets relativement petits qui ont pu passer à travers les trous (10) lors du transport de déchets à travers le tambour (3) ; et
des seconds moyens de rejet, par exemple une troisième courroie transporteuse sans fin (13), destinés à recevoir et rejeter des composants de déchets essentiellement relativement grands qui ont pu passer à travers l'ouverture de rejet (9) ;
comprenant, en outre :
au moins une nervure de transport hélicoïdale (14) qui est située sur la surface intérieure du tambour et qui est conçue pour entraîner, et donc transporter, des déchets qui sont présents dans le tambour (3) dans la direction de transport (15), c'est-à-dire la direction allant de l'ouverture d'introduction (8) à l'ouverture de rejet (9), par le biais de la rotation du tambour (3) ; et
un certain nombre de plaques d'obstruction (16) disposées angulairement et de manière équidistante, qui couvrent conjointement les trous et qui sont supportées par le tambour (3) par le biais de supports (17) sur le côté extérieur du tambour (3) et qui présentent chacune la forme d'une partie d'un cylindre, dont l'axe central est situé à l'intérieur du tambour (3), lesdites plaques d'obstruction (16) servant à empêcher le passage de composants de déchets allongés à travers les trous (10) ;
**caractérisé en ce que**
l'au moins une nervure de transport (14) s'étend sur toute la longueur du tambour (3) ; les trous (10) sont groupés en un motif tel qu'un certain nombre de trous (10) sont disposés en un rang hélicoïdal, ce rang présentant une forme hélicoïdale correspondant à la nervure de transport (14) adjacente placée en aval dans la direction de transport,
la distance de chaque trou (10) vis-à-vis de cette nervure de transport (14) est inférieure à 0,4 x la dimension linéaire la plus petite d'un trou (10) ;
des éléments de division (19) disposés en un motif régulier à des distances mutuelles égales sont situés dans la région centrale de la zone entre les spires adjacentes de la nervure (14) ou des nervures (14, 18), lesdits éléments de division (19) comprenant deux plaques verticales (20, 21) disposées ensemble en forme de V par rapport à la paroi intérieure du tambour (3) et comportant un bord avant aiguisé orienté de manière opposée à la direction de déplacement (32) des déchets entre ces spires et présentant une largeur dans l'ordre de grandeur de l'épaisseur des plaques (20, 21) ; et
l'une des plaques (21) s'étend dans la direction de la tangente locale des spires adjacentes de la nervure (18) ou des nervures (14, 18) et l'autre plaque (20) présente une orientation telle qu'elle entraîne les déchets acheminés dans la direction de transport vers un trou (10).

2. Dispositif selon la revendication 1, comprenant au moins deux nervures de transport (14, 18) identiques s'étendant de manière équidistante l'une vis-à-vis de l'autre.

3. Dispositif selon la revendication 1, dans lequel les trous (10) présentent tous une forme choisie dans le groupe comprenant : ronde, ovale, triangulaire, rectangulaire, par exemple carrée, pentagonale, hexagonale et octogonale, éventuellement régulière, et présentent une orientation choisie.

4. Dispositif selon la revendication 3, dans lequel le cercle inscrit de chaque trou a un diamètre de 200 à 400 mm.

5. Dispositif selon la revendication 1, dans lequel le motif de trous comprend : des rangs de trous (10) s'étendant angulairement de manière équidistante les uns par rapport aux autres dans la direction longitudinale du tambour.

6. Dispositif selon la revendication 5, dans lequel le motif de trous comprend :
des paires de deux rangs de trous (10) mutuellement parallèles, qui s'étendent angulairement de manière équidistante les uns par rapport aux autres dans la direction longitudinale du tambour et sont disposés à une certaine distance de paires de rangs adjacentes.

7. Dispositif selon la revendication 1, dans lequel le motif de trous comprend un second rang hélicoïdal de trous (10), ce rang présentant une forme hélicoïdale correspondant à la nervure de transport (18) adjacente placée en amont dans la direction de transport, et la distance de chaque trou (10) vis-à-vis de cette nervure de transport (18) est inférieure à 0,4 x la dimension linéaire la plus petite d'un trou (10).

8. Dispositif selon la revendication 1, dans lequel des éléments de retournement (25) sont disposés sur la nervure (14) et sur le côté intérieur du tambour (3) dans l'espace (24) entre les trous (10) sur le côté situé en aval dans la direction de transport (32), lesdits éléments de retournement (25) comportant une première plaque (26) présentant une forme qui s'étend en biseau à partir de la nervure (14) et est, en particulier, globalement triangulaire et présentant une position inclinée vers l'intérieur par rapport à la direction locale de déplacement (23) des déchets, et comportant une seconde plaque (27) s'étendant jusqu'à une position au-dessus de la nervure (14), de façon à éviter que les déchets forment des amas ou des rouleaux semblables à des boudins.

9. Dispositif selon la revendication 5 ou 6, dans lequel le nombre de rangs de trous (10) ou de paires (28) de trous (10) s'élève à 4 à 10 et une plaque d'obstruction (16) qui couvre ces trous (10) est ajoutée à chaque rang ou paire (28) de rangs.

10. Dispositif selon la revendication 1, dans lequel chaque plaque d'obstruction (16) présente une forme et/ou une position par rapport au tambour (3) telle(s) que, dans la région inférieure du tambour (3), la distance entre une plaque d'obstruction (16) et le tambour (3) augmente pendant le fonctionnement, de telle sorte qu'on obtient ainsi une forme facilitant la libération.

11. Dispositif selon la revendication 1, dans lequel un tube (28) est raccordé à chaque trou (10) sur le côté extérieur du tambour (3) et l'extrémité extérieure (29) de ce tube (28) se situe à une certaine distance de la surface intérieure d'une plaque d'obstruction (16) correspondante.

12. Dispositif selon la revendication 11, dans lequel la forme intérieure de chaque tube (28) correspond à la forme du trou (10) associé.
